Europäisches Patentamt

European Patent Office

Office européen des brevets

(19)

(11) **EP 0 971 203 B1**

(12) **FASCICULE DE BREVET EUROPEEN**

(45) Date de publication et mention
de la délivrance du brevet:
**16.02.2005 Bulletin 2005/07**

(51) Int Cl.$^7$: **G01B 11/06**

(21) Numéro de dépôt: **99401492.6**

(22) Date de dépôt: **17.06.1999**

(54) **Procédé et dispositif pour la mesure de l'épaisseur d'un matériau transparent**

Verfahren und Vorrichtung zur Messung der Dicke von transparenten Materialien

Method and apparatus for measuring the thickness of a transparent material

(84) Etats contractants désignés:
**BE DE ES FR GB IT LU PT**

(30) Priorité: **03.07.1998 FR 9808473**

(43) Date de publication de la demande:
**12.01.2000 Bulletin 2000/02**

(73) Titulaire: **SAINT-GOBAIN GLASS FRANCE**
**92400 Courbevoie (FR)**

(72) Inventeurs:
• **Zhang, Jingwei**
**92160 Antony (FR)**

• **Grente, Pascal**
**92400 Courbevoie (FR)**

(74) Mandataire: **Muller, René et al**
**SAINT-GOBAIN RECHERCHE**
**39, quai Lucien Lefranc**
**93300 Aubervilliers (FR)**

(56) Documents cités:
**EP-A- 0 506 297       WO-A-95/22740**
**US-A- 4 594 003**

## Description

L'invention concerne un procédé et un dispositif pour la mesure d'épaisseur de matériaux transparents. Plus particulièrement, mais non exclusivement, l'invention vise la mesure d'épaisseur de matériaux en verre et plus précisément encore la mesure d'épaisseur de verre plat, notamment de verre flotté.

Les exigences générales de qualité requises par les clients et les économies qu'il est possible de réaliser en se maintenant au bas de la fourchette de tolérances d'épaisseur nécessitent un contrôle très rigoureux de l'épaisseur dans la fabrication de masse de verre plat.

Parmi les techniques habituellement utilisées pour la mesure de l'épaisseur, les méthodes les plus précises, utilisables dans les milieux transparents, sont les méthodes optiques. Parmi celles-ci, les techniques interférométriques, autrefois limitées aux mesures de laboratoire, ont progressivement trouvé des applications industrielles.

Ainsi le document FR-A-2 435 019 propose une technique de mesure d'épaisseur d'une pellicule mince qui consiste à irradier la pellicule mince à l'aide d'une lumière infrarouge séparée spectroscopiquement par un balayage rapide sur une gamme de longueurs d'onde prédéterminée en fonction de la nature de la pellicule de manière à créer un spectre de frange d'interférences entre les rayons réfléchis dont on détermine les points extrêmes. La technique est limitée à des épaisseurs nécessairement inférieures à 30 $\mu$m. Elle consiste à dénombrer les franges d'interférence de rayons réfléchis par les surfaces de la pellicule. Une telle méthode n'est pas utilisable à la mesure de l'épaisseur de verre plat sur une ligne de production de verre flotté dont l'épaisseur varie de moins de 1 mm jusqu'à 2 cm.

Un autre document, WO 95/22740, décrit une méthode interférentielle pour déterminer l'épaisseur de la paroi de bouteilles au cours de leur fabrication.

Le procédé se caractérise en ce qu'on émet un faisceau lumineux à fréquence optique modulée, en ce qu'on réceptionne deux faisceaux ou rayons lumineux renvoyés par chacune des surfaces d'une paroi du matériau, en ce qu'on crée une interférence entre eux et en ce qu'on détermine la différence de marche $\delta$ du signal d'interférence. On utilise une diode laser comme source d'éclairement, celui-ci est modulé par une modulation de la fréquence optique du faisceau. Parmi les rayons diffusés par les deux parois, on sélectionne deux rayons parallèles. Le dispositif de l'invention permet d'effectuer sur chaque capteur des mesures espacées de 0,3 msec. On peut ainsi explorer tous les millimètres de la périphérie d'une bouteille en rotation.

Cette technique qui utilise pour la mesure des rayons isolés diffusés par les surfaces nécessite des lasers relativement puissants (> 30 mW) ce qui peut présenter des inconvénients. Il serait difficile d'utiliser la même méthode avec des faisceaux réfléchis parallèles à cause de la prismaticité du support et notamment du verre plat qui est toujours prismatique dans les zones de bord.

La méthode de WO 95/22740, si elle fournit une bonne précision sur la mesure absolue de l'épaisseur, est moins adaptée à suivre les variations locales faibles de l'épaisseur. Ce type de mesure est pourtant très important pour détecter le plus tôt possible les dérives de l'épaisseur nominale d'un verre plat sur sa ligne de production. D'autre part, la méthode de WO 95/22740 ne permet pas de mesurer des épaisseurs inférieures à 0,7 mm.

L'invention, objet de la présente demande de brevet, se donne pour tâche de développer les techniques précédentes en en améliorant les performance.

L'invention propose un procédé de mesure d'épaisseur (e) d'un matériau transparent d'indice de réfraction (n) dans lequel on focalise un faisceau lumineux à fréquence optique modulée, où l'on réceptionne deux faisceaux ou rayons lumineux renvoyés par chacune des surfaces du matériau transparent, où l'on crée une interférence entre eux, où l'on détermine le nombre de battements par période de modulation du signal d'interférence, où l'on déduit la différence de marche ($\delta$) entre les deux faisceaux et l'épaisseur (e) du matériau transparent et dans lequel on détermine également le déphasage ($\Delta\varphi$) dudit signal d'interférence.

. Cette détermination de déphasage entre les deux signaux enregistrés successivement peut alors être utilisée pour en déduire d'autres caractéristiques dudit matériau. Elle peut notamment être appliquée à la mesure précise de variations locales d'épaisseur, notamment d'un ruban de verre flotté. De même, il est prévu qu'on l'applique à la mesure de l'épaisseur d'un matériau transparent mince, de préférence supérieure à 0,2 mm.

Le procédé de l'invention se caractérise en ce que le faisceau lumineux à fréquence optique modulée est émis par une diode laser à réflecteur de Bragg distribué (DBR).

Une autre caractéristique en est qu'on réceptionne les faisceaux renvoyés par les surfaces du matériau transparent en réflexion spéculaire et une autre enfin, que le faisceau lumineux focalisé, converge avant d'atteindre les surfaces du matériau transparent de telle sorte qu'il est divergent au niveau des surfaces dudit matériau transparent qu'il atteint.

Toutes ces caractéristiques prises isolément ou en groupe permettent d'obtenir les variations locales d'épaisseur par réception du signal d'interférence sur un détecteur suivie par :

- la numérisation du signal si nécessaire ;
- l'obtention du quotient du signal d'interférence par la modulation de l'intensité ;

- le filtrage passe bande du quotient ;
- la détermination des extréma du signal résultant pour la mesure à l'instant k ;
- la détermination du temps séparant les extréma homologues de deux mesures successives (k et k+1) ;
- le calcul du quotient du temps précédent par la période correspondante et sa multiplication par 2 π pour obtenir le déphasage Δφ ;
- le calcul de la variation d'épaisseur par la formule :

$$\Delta e = \frac{\lambda_0 \cdot \Delta\varphi}{4n\pi}$$

avec :

- $\lambda_0$ = longueur d'onde de diode laser sans modulation,
- Δφ = déphasage,
- n = indice de réfraction.

Le procédé de l'invention permet grâce à cette méthode d'évaluation des variations d'épaisseur de suivre celles-ci avec une précision meilleure que $1.10^{-8}$ m. Une telle précision permet très avantageusement de mesurer par exemple des défauts dioptriques du verre flotté, ou dit encore verre "float". Le défaut dioptrique est, comme il est connu, mathématiquement lié à la dérivée seconde du profil d'épaisseur.

L'invention concerne également le dispositif destiné à mettre en oeuvre le procédé. Il comporte notamment une source de lumière à diode laser DBR, des moyens de réception d'un signal interférentiel et un calculateur effectuant successivement :

- la numérisation des signaux ;
- le quotient du signal interférentiel et de la modulation d'intensité ;
- le filtrage passe bande du quotient numérisé ;
- la détermination des extrémas ;
- la détermination du temps séparant les extréma homologues de deux mesures successives (k et k+1);
- le quotient des temps précédents par les périodes correspondantes et sa multiplication par 2 π pour obtenir le déphasage et enfin,
- le calcul de la variation d'épaisseur par la formule :

$$\Delta e = \frac{\lambda_0 \cdot \Delta\varphi}{4n\pi}$$

Dans une variante, le dispositif comporte des guides d'onde à fibres optiques pour transporter la lumière émise par la diode laser et/ou réfléchie par les surfaces de l'objet transparent. Cette technique permet de travailler dans des environnements hostiles comme à la chaleur ou dans la poussière. On peut ainsi effectuer des mesures dès que l'échantillon à contrôler, du verre "float" par exemple, sort de son dispositif d'élaboration notamment du bain float.

Une variante comporte également comme moyen de réception des photodiodes à avalanche.

Les figures et la description qui suivent permettront de comprendre le fonctionnement de l'invention et d'en saisir les avantages.

La **figure 1** montre le principe optique du dispositif de mesure.

La **figure 2** représente la zone d'interférences d'un verre plan à faces parallèles et la **figure 3** la même zone avec l'optique de réception ; quant à la **figure 4** elle montre les franges d'interférences dans un plan P de ladite zone d'interférences.

La **figure 5** présente une vue schématique du dispositif électronique d'exploitation du signal optique.

La **figure 6** montre les index des extrema pour deux mesures successives (k et k+1) dans le cas d'une émission par diode laser DBR et la **figure 7** et la **figure 8** représentent les signaux $V_{int}$, $V_{mod}$ et $V_{div}$ avec une diode laser classique, respectivement pour 1,67 mm et 3,83 mm. Quant aux **figures 9 et 10**, elles représentent, pour une diode laser DBR, le signal de division pendant le montant de modulation, respectivement pour un verre plat de 1,67 mm et de 3,83 mm d'épaisseur.

La **figure 11** montre un profil d'épaisseur mesuré selon l'invention en comparaison avec des mesures manuelles.

Au cours de la fabrication du verre plat, la mesure du profil d'épaisseur du ruban float est nécessaire pour deux raisons : contrôle de qualité et contrôle de process à chaud.

Pour le contrôle de qualité, le suivi du profil d'épaisseur du ruban float est actuellement réalisé sur ligne (à l'équarri) par des appareillages commerciaux. Il fonctionnent soit par absorption du rayonnement gamma, soit par voie optique.

Les appareils fonctionnant par absorption du rayonnement gamma n'ont certainement pas d'avenir, car les appareils utilisant une source radioactive sont appelés à disparaître, à cause des réglementations restrictives nationales et internationales.

Les appareils fonctionnant par voie optique utilisent un procédé optique géométrique. Un rayon laser réfléchi par le verre donne deux spots qui correspondent aux deux faces. L'écart entre ces deux spots est proportionnel à l'épaisseur du verre.

Ces appareils ne sont pas fiables, car ils sont sensibles à la distance au verre et surtout à l'inclinaison du verre. Ils sont aussi difficiles à régler. Le défaut majeur de ces appareils est qu'ils n'ont pas une précision suffisante, surtout en verre mince et extra-mince, c'est-à-dire d'épaisseur inférieure à 0,5 mm.

Pour le contrôle de process, il est préférable d'installer un appareil de mesure d'épaisseur à chaud, c'est-à-dire dès la sortie de float. Cela permettra de contrôler le profil d'épaisseur immédiatement après chaque réglage dans le float, sans avoir à attendre que le verre sorte de l'étenderie pour pouvoir le contrôler. Ainsi, on pourrait trouver un meilleur réglage pour le float, de sorte que le profil d'épaisseur soit plus plat et que l'épaisseur soit à la limite inférieure du cahier des charges. Cela engendrerait un gain considérable en poids.

Le contrôle d'épaisseur à chaud permettra aussi de réduire les pertes de production lors de changements d'épaisseur, surtout en verre épais.

Il faut donc développer un capteur capable de mesurer le profil d'épaisseur à chaud comme à froid, fiable, robuste, précis ($\pm$ 0,005 mm) et économique.

Il est bien connu qu'à la sortie d'un interféromètre éclairé par une source monochromatique, le signal d'interférence reçu par un photodétecteur est donné par :

$$V_{\text{int}} \propto I_0\left(1 + C \cdot \cos\left(\frac{2\pi}{\lambda}\delta\right)\right) \qquad (1),$$

le signe $\propto$ signifiant "proportionnel à".

Les techniques interférentielles sont bien connues, notamment grâce au document WO 95/22740 qui décrit l'utilisation d'interférences à partir d'une source à fréquence optique modulée.

Dans un interféromètre, si la fréquence optique ou $1/\lambda$ peut être modulée par une modulation linéaire sous forme de triangle symétrique, on peut écrire :

$$\frac{1}{\lambda} = \frac{1}{\lambda_0} + g_0(t) \cdot \frac{1}{T/2} \qquad (2)$$

Ici, $\lambda_0$ désigne la longueur d'onde initiale de laser sans modulation, $g_0(t)$ représente la forme de modulation de $1/\lambda$ en fonction du temps désigné par t, et T représente la période de la modulation triangulaire.

Dans ce cas, pour une différence de marche $\delta$ fixe, le signal d'interférence varie en fonction de la longueur d'onde qui est modulée dans le temps. C'est un phénomène d'interférence hétérodyne.

En mettant l'équation (2) dans l'équation (1) on a, pour l'instant t, le signal d'interférence pendant la montée ou la descente du signal donné par :

$$V_{\text{int}} \propto I_0\left(1 + C \cdot \left(\varphi_0 + g_1(t)\right)\right) \qquad (3)$$

où :

$$\varphi_0 = \frac{2\pi}{\lambda_0}\delta \qquad (3\text{-}1)$$

$$g_1(t) = 2\pi \frac{g_0(t)}{T/2} \delta \qquad\qquad (3\text{-}2)$$

Pour une diode laser classique, dans la condition où le saut de mode est absent, la longueur d'onde est modulée linéairement :

$$\frac{1}{\lambda} = \frac{1}{\lambda_0} + \Delta\left(\frac{1}{\lambda}\right) \cdot \frac{t}{T/2} \qquad\qquad (4)$$

Dans ce cas, on a :

$$V_{int} \propto I_0 \left(1 + C \cdot \cos(\varphi_0 + \omega t)\right) \qquad\qquad (5)$$

avec :

$$\varphi_0 = \frac{2\pi}{\lambda_0}\delta \qquad\qquad (6\text{-}1)$$

$$\omega = 2\pi \cdot \Delta\left(\frac{1}{\lambda}\right)\frac{\delta}{T/2} \qquad\qquad (6\text{-}2)$$

A partir de l'équation (5), on voit qu'en utilisant une diode laser classique, une modulation linéaire de la fréquence optique (ou $1/\lambda$) entraîne un signal sinusoïdal dont la pulsation est $\omega$. Pendant une demi-période de modulation triangulaire, il y a N battements :

$$N = \frac{\omega \cdot T/2}{2\pi}$$

ce qui donne :

$$N = \Delta\left(\frac{1}{\lambda}\right) \cdot \delta = \frac{\Delta\lambda}{\lambda_0^2} \cdot \delta \qquad\qquad (7)$$

où $\Delta\lambda$ représente l'excursion de longueur d'onde sans saut de mode d'une diode laser classique.

Ici, on doit souligner que le nombre N n'est pas forcément un nombre entier. Il est proportionnel à la différence de marche $\delta$. C'est un paramètre à exploiter car il est normalisé par rapport à la fréquence de modulation $1/T$.

Connaissant les caractéristiques de la diode laser utilisée, c'est-à-dire $\Delta\lambda$ et $\lambda_0$, la mesure de N (nombre de battements par demi-période de modulation triangulaire) permet de déterminer la différence de marche $\delta$.

Pour notre application, le verre peut être considéré comme un interféromètre en réflexion. Si la lumière attaque une plaque de verre, elle sera réfléchie par les deux faces du verre. Ces deux réflexions interfèrent avec une différence de marche :

$$\delta = 2ne \qquad\qquad (8)$$

où n et e représentent, respectivement, l'indice de réfraction et l'épaisseur du verre.

Par la mesure de la différence de marche $\delta$, connaissant l'indice de réfraction du verre n, on peut déduire l'épaisseur e. Par rapport au mode de mesure relative qu'on va développer dans le paragraphe suivant, la mesure se fait en mode absolu.

Si l'on fait une analyse plus profonde de l'équation (5), on peut observer que le signal a non seulement une pulsation $\omega$ qui est proportionnelle à l'épaisseur, mais aussi une phase $\varphi_0$ qui est proportionnelle à la différence de marche $\delta$, donc l'épaisseur e (voir l'équation (3-1)).

La mesure de pulsation $\omega$ ou de N nous permet de déterminer l'épaisseur du verre e. En même temps, la mesure de variation de phase nous donne accès à l'information de la variation d'épaisseur.

Pour la mesure k et la mesure k+1 qui sont deux mesures successives, si le capteur se déplace par rapport à un échantillon de verre, les épaisseurs correspondantes sont respectivement $e_{(k)}$ et $e_{(k+1)}$ et les phases correspondantes sont respectivement $\varphi_{0(k)}$ et $\varphi_{0(k+1)}$. On obtient :

$$\varphi_{0(k)} = \frac{2\pi}{\lambda_0} 2ne_{(k)}$$

et

$$\varphi_{0(k+1)} = \frac{2\pi}{\lambda_0} 2ne_{(k+1)}$$

Le déphasage est donné par :

$$\Delta\varphi_{(k)} = \varphi_{0(k+1)} - \varphi_{0(k)} = \frac{2\pi}{\lambda_0} 2n \cdot \Delta e_{(k)} \tag{9}$$

avec :

$$\Delta e_{(k)} = \left( e_{(k+1)} - e_{(k)} \right) \tag{10}$$

Rappelons que $\lambda_0$ est la longueur d'onde de diode laser sans modulation, elle est donc un paramètre fixe. Connaissant l'indice de réfraction n du verre, la mesure de déphasage nous permet de déterminer la variation d'épaisseur $\Delta e_{(k)}$ à la mesure k selon l'équation (9).

Pour un déphasage de 10° qui est facilement mesurable, si l'indice du verre est de 1,52 et la longueur d'onde $\lambda_0$ est de 780 nm, la variation d'épaisseur est de 7 nm. Alors le procédé a une capacité de mesure de variation d'épaisseur qui est meilleure que 10 nm, soit $1.10^{-8}$ m. Cette capacité nous permet de mesurer des défauts dioptriques du verre flotté par exemple.

L'invention se fonde sur le principe qui vient d'être exposé.

Dans une variante, elle utilise, au lieu d'une diode laser classique une diode laser DBR (Distributed Bragg Reflector - Voir T. HIRATA, M. MAEDA, M. SUEHIRO, H. HOSOMATSU "Fabrication and Characterisation of GaAs-AlGaAs Tunable Laser Diodes with DBR and Phase-Control Sections Integrated by Compositional Disordering of a Quantum Well " IEEE JOURNAL OF QUANTUM ELECTRONICS, VOL. 27, N° 6, JUNE 1991).

Pour une diode laser classique typique avec $\lambda_0$ = 780 nm et $\Delta\lambda$ = 0,24 nm, on a pour e = 1 mm :

$$N = 1,2$$

Une diode laser DBR typique a les caractéristiques suivantes : $\lambda_0$ = 850 nm et $\Delta\lambda$ = 2 nm, on a pour e = 1 mm :

$$N = 8,4$$

On peut remarquer qu'en utilisant une diode laser DBR, même pour une épaisseur de 0,5 mm, on a encore plus de 4 battements pour effectuer une mesure de fréquence afin de déterminer l'épaisseur, ce qui est très confortable. Là mesure d'épaisseur du verre mince, voire extra-mince (0,2 mm), est donc possible.

Cependant, il faut souligner que, contrairement à une diode laser classique, la modulation de longueur d'onde d'une diode laser DBR n'est pas linéaire pour une modulation linéaire du courant. Autrement dit, la fonction $g_0(t)$ dans l'expression (2) est une fonction non linéaire du temps pour une diode laser DBR.

De façon générale, le signal d'interférence peut être représenté par :

$$V_{int} \propto I_0 \big( 1 + C \cdot \cos(\varphi_0 + e \cdot g(t)) \big) \qquad (11)$$

avec :

$$g(t) = b_1 t + b_2 t^2 + b_3 t^3 + \cdots \text{pour diode laser DBR} \qquad (12)$$

et :

$$g(t) = \left( 2\pi \cdot \Delta\left(\frac{1}{\lambda}\right) \frac{2n}{T/2} \right) t \quad \text{pour diode laser classique} \qquad (13)$$

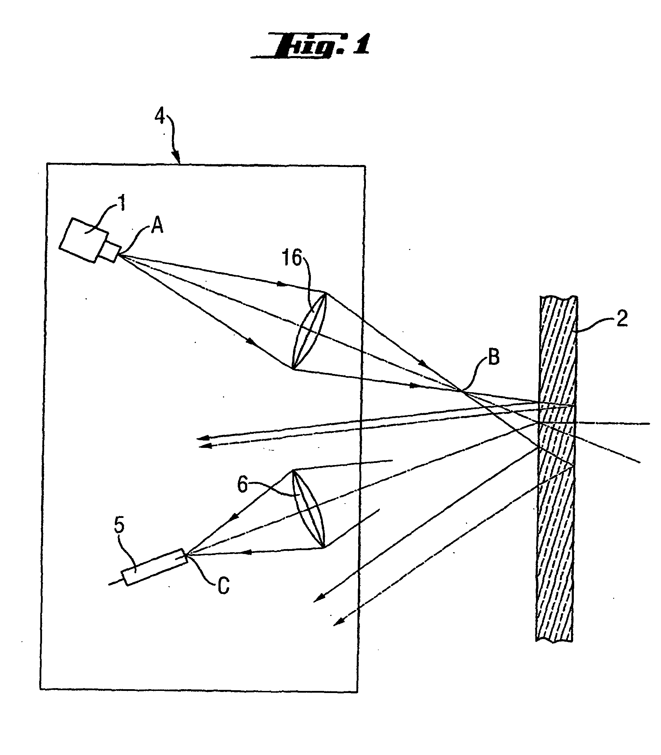

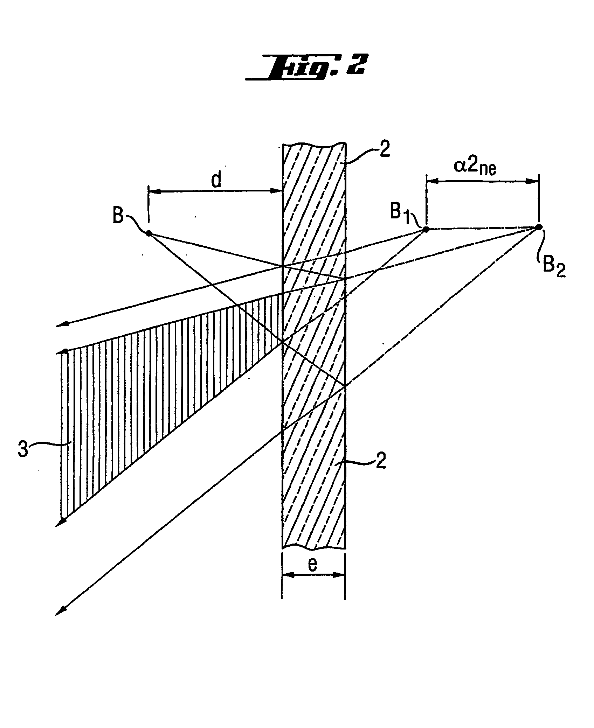

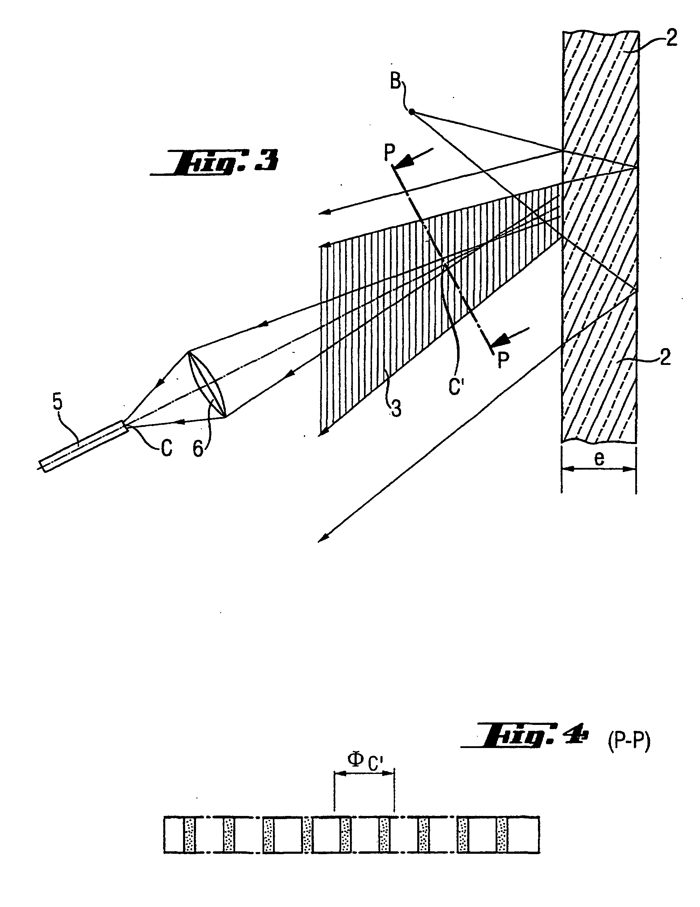

La **figure 1** présente le système optique sous une forme schématique.

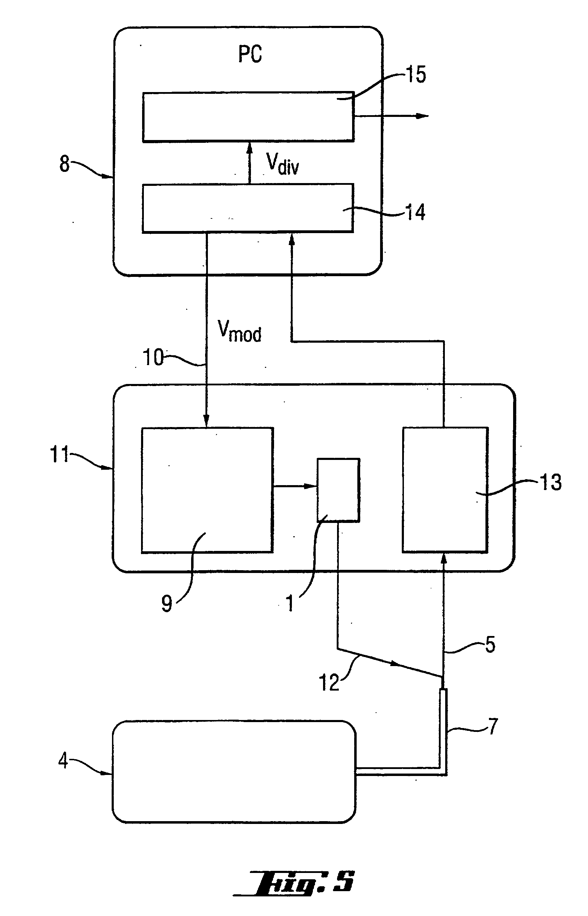

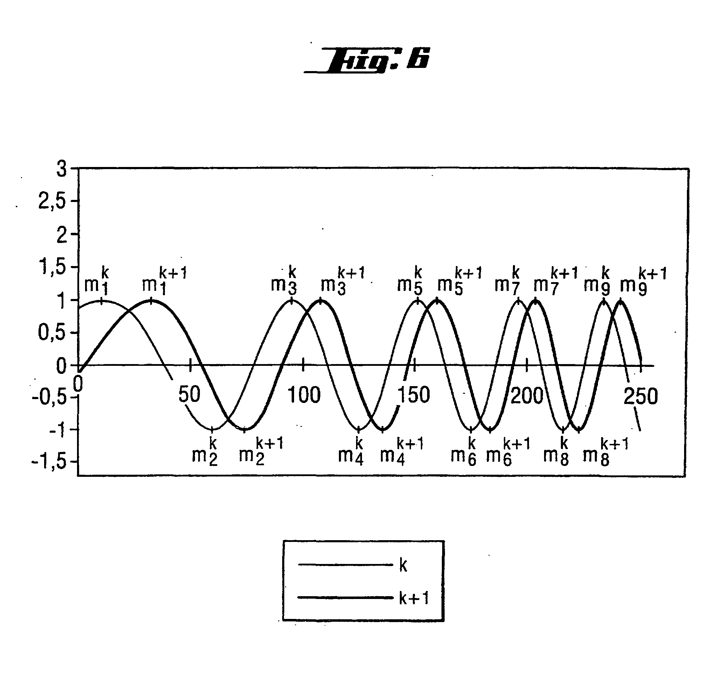

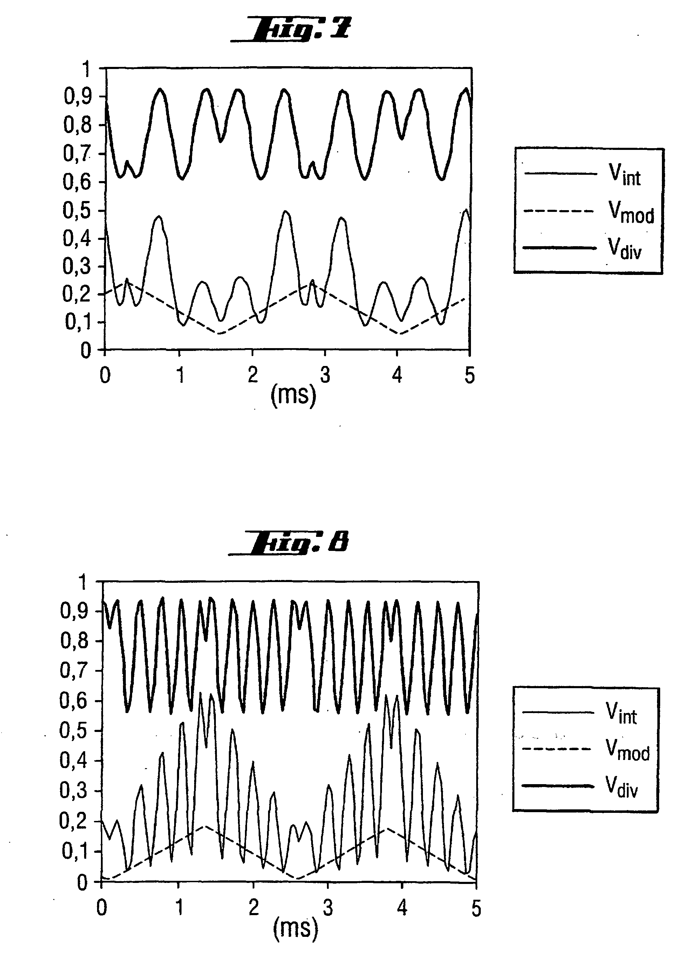

On voit en 1 la source lumineuse, diode laser classique ou diode laser DBR. L'image de sa sortie A est formée en B par une lentille 16. La position du point B par rapport à l'échantillon de verre 2 n'est pas indifférente. Le fait que cette nouvelle source lumineuse fournisse un faisceau divergent au niveau du verre permet d'obtenir une zone d'interférences, représentée en 3 **figure 2**, importante, même dans le cas où le verre est prismatique ce qui peut diminuer l'ouverture de la zone 3. Ainsi la partie détection du signal ne risque pas de se trouver hors de la zone où la mesure est possible et celà même dans les parties d'un ruban de verre flotté fortement prismatiques, aux bords.

Les sources de lumière utilisées lors des essais étaient soit une diode laser classique HL 7851 G (Hitachi) d'une puissance de 50 mW et d'une longueur d'onde $\lambda$ de 780 nm, soit une diode laser DBR YL 85 XT à 852 nm de Yokogawa.

De manière à éviter un échauffement trop important des systèmes optoélectroniques, une variante de l'invention prévoit, pour l'utilisation du procédé de l'invention dans des zones chaudes de production, l'emploi de fibres optiques. La lumière d'une diode laser est alors couplée dans une fibre optique monomode qui n'est pas représentée sur les figures.

Les rayons lumineux issus de la source secondaire B sont réfléchis par les deux surfaces de l'échantillon (réflexion spéculaire qui fournit une intensité bien supérieure à celle de rayons diffusés par les surfaces comme dans l'art antérieur. Cependant, l'invention est également compatible avec des rayons diffusés).

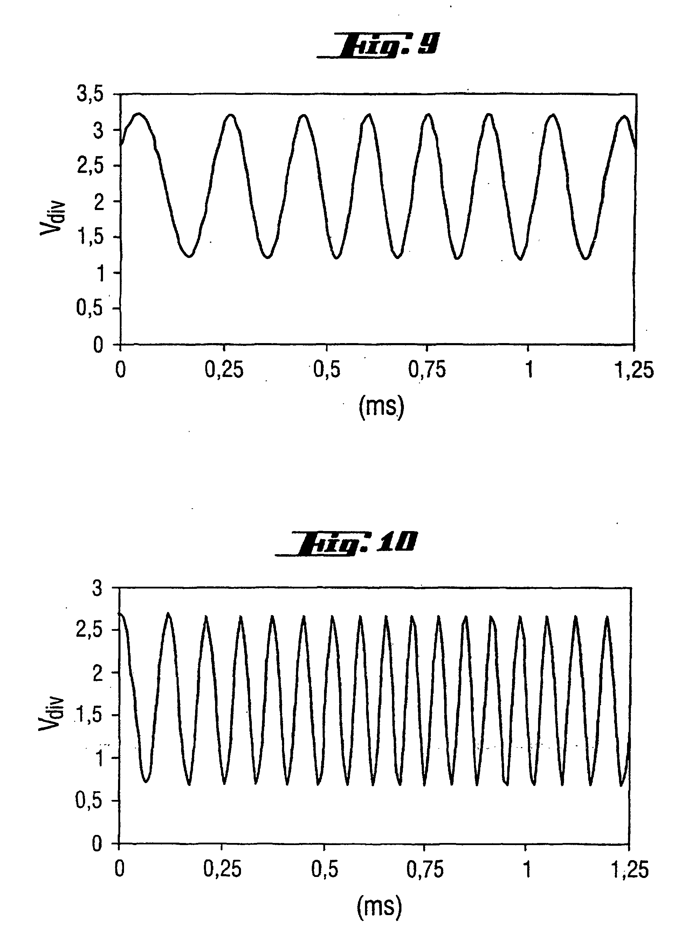

Les faisceaux réfléchis semblent provenir de deux sources ponctuelles $B_1$ et $B_2$ (**figure 2**), leur distance est proportionnelle à l'épaisseur e de l'échantillon. C'est elle qu'il s'agit de mesurer. Pour la mesure, le côté émission et le côté réception du système sont réunis sur la figure 1, le rectangle 4 contient tout le dispositif de l'invention. On y trouve donc, en plus de la partie émission déjà décrite, la partie réception. On trouve ainsi une lentille 6 qui focalise en C un élément C' de la zone d'interférences 3, soit directement sur l'organe de détection soit, comme sur les **figures 1 et 3**, sur l'entrée d'une fibre optique multimode 5. La fibre optique est connectée à un détecteur ; on utilise avantageusement une photophotodiode à avalanche (APD).

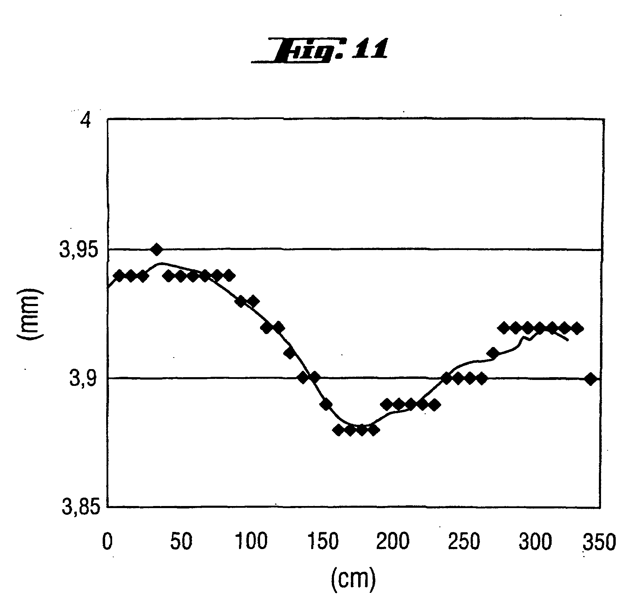

Sur la **figure 4**, on a représenté une section de la zone d'interférences 3 au niveau du point C' recueilli par la lentille 6. L'indication $\Phi_{C'}$ représente ce qui est réellement " vu " par la lentille 6 et la fibre optique 5.

Le système de mesure se trouve représenté **figure 5**. L'essentiel est un ordinateur 8, PC par exemple, il gère les dispositifs optoélectroniques et analyse et traite le signal optique détecté. La source lumineuse 1, diode laser classique ou DBR située dans le boîtier électronique 11, est alimentée par une unité d'alimentation 9. Celle-ci reçoit de l'ordinateur 8 un signal de modulation $V_{mod}$ par le câble 10. Le signal optique issu de la diode laser 1 est transmis par la fibre optique monomode 12 qui transite par une gaine 7 jusqu'à la tête de mesure 4. L'autre fibre optique multimode 5 qui transite par la même gaine 7 recueille le signal optique en C et le transmet au détecteur 13 qui est, de préférence, une photodiode à avalanche.

Le système PC est en fait un système de traitement du signal. Il comprend :

- une carte diviseur,
- un logiciel de traitement numérique du signal.

Ces deux parties seront traitées plus en détail dans le paragraphe suivant.

Le procédé par interférométrie hétérodyne utilise une modulation linéaire de courant pour moduler la longueur d'onde de diode laser. Cependant, l'intensité lumineuse de diode laser est aussi modulée dans le temps.

Si on réexamine l'expression (11) qui est valable pour une diode laser classique et aussi pour une diode laser DBR, on s'aperçoit que si l'intensité $I_o$ est modulée dans le temps de quelque façon que ce soit, il ne sera pas possible d'exploiter les termes (pulsation et phase) du signal sinusoïdal.

Pour une diode laser classique, une modulation linéaire de courant entraîne une modulation linéaire de l'intensité $I_0$. Par contre, dans le cas d'une diode laser DBR, une modulation linéaire de courant entraîne une modulation non linéaire de l'intensité $I_0$.

La solution à ce problème consiste à faire la division entre le signal d'interférence et la modulation en intensité $V_{mod} = I_o(t)$. Dans ce cas, on obtient :

$$V_{div} = \frac{V_{int}}{V_{mod}} \propto 1 + C \cdot \cos\left(\varphi_0 + e \cdot g(t)\right) \qquad (14)$$

avec :

$$g(t) = b_1 t + b_2 t^2 + b_3 t^3 + \cdots \text{pour diode laser DBR} \qquad (15\text{-}1)$$

et :

$$g(t) = \left(2\pi \cdot \Delta\left(\frac{1}{\lambda}\right)\frac{2n}{T/2}\right)t \quad \text{pour diode laser classique} \qquad (15\text{-}2)$$

Le signal de division obtenu est indépendant de la modulation de l'intensité de diode laser. Il n'est plus qu'un signal sinusoïdal pur, ce qui nous permet de l'exploiter et de déterminer l'épaisseur.

Dans le cas précis du capteur réalisé, la division se fait numériquement par une carte électronique DIVISEUR sous format PC. Installée dans un PC, elle fait la division, en même temps, elle fournit aussi la source de modulation triangulaire à l'alimentation de diode laser, $V_{mod}$. Cette carte diviseur est marquée 14 sur la **figure 5**.

Le PC reçoit le résultat de division transmis par le DIVISEUR. Alors le traitement numérique du signal peut commencer dans l'unité 15.

Pour notre application, la fréquence de modulation triangulaire peut être de 2 kHz. Pour un montant ou un descendant de modulation, 250 points de division sont disponibles.

Le premier traitement est un filtrage passe-bande. Cela conduit à éliminer du bruit et le niveau continu de $V_{div}$, sans pour autant déformer le signal sinusoïdal.

Le deuxième traitement consiste à déterminer les positions des extremums, c'est-à-dire les index numériques (entre 1 et 250) de maxima et de minima du signal sinusoïdal. Le dernier traitement est pour la détermination de l'épaisseur.

Pour un signal de division Vdiv en montant ou en descendant, les index pour les extremums peuvent être exprimés par un vecteur M. La **figure 6** montre ces index des extremums pour deux mesures successives k et k+1. Sur cette figure, une modulation de fréquence (l'effet d'accordéon) est visible, ce qui correspond au cas d'une diode laser DBR. Néanmoins, cette modulation de fréquence peut représenter le cas général du signal, pour une diode laser classique comme pour une diode laser DBR.

Pour la mesure k, on obtient un vecteur Mk qui contient L index des extremums :

$$M_k = \left[m_j^k\right] = \left[m_1^k, m_2^k, m_3^k, m_4^k, \ldots, m_L^k\right]$$

où :

$$1 < m_j^k < 250 \text{ et } 1 \leq j \leq L$$

Pour mesurer l'épaisseur en tant que telle (mesure absolue), on procède de la manière suivante.

Le signal de division étant sous forme numérique, le terme de temps (t) perd son sens traditionnel. La notion du temps est remplacée par un entier qui varie de 1 à 250.

Connaissant la fonction g(t), selon l'expression (14), on a :

$$e \cdot \left[ g\left(m_{j+1}^k\right) - g\left(m_j^k\right) \right] = \pi \qquad (16)$$

Cela veut dire que pour les deux extremums successifs correspondant respectivement à $t = m_j^k$ et à $t = m_{j+1}^k$, la phase change de $\pi$ ou de 180°. Comme pour une épaisseur donnée et une diode laser donnée, on a L extrema, l'épaisseur e peut être déterminée dans le sens de moindre carré, en minimisant la fonction suivante :

$$Y = \sum_{j=1}^{L-1} \left[ e \cdot \left( g\left(m_{j+1}^k\right) - g\left(m_j^k\right) \right) - \pi \right]^2$$

Le minimum de la fonction Y existe pour dY/de = 0, ce qui donne :

$$e = \pi \frac{\sum_{j=1}^{L-1} \left( g\left(m_{j+1}^k\right) - g\left(m_j^k\right) \right)}{\sum_{j=1}^{L-1} \left( g\left(m_{j+1}^k\right) - g\left(m_j^k\right) \right)^2} \qquad (17)$$

Cette formule de détermination d'épaisseur est valable aussi bien pour une diode laser classique que pour une diode laser DBR.

Pour effectuer la mesure des variations d'épaisseur (mesure relative), il faut calculer la dérivée du profil d'épaisseur.

Pour la mesure k+1, on a :

$$M_{k+1} = \left[ m_j^{k+1} \right] = \left[ m_1^{k+1}, m_2^{k+1}, m_3^{k+1}, m_4^{k+1}, \ldots, m_L^{k+1} \right]$$

Si le vecteur $M_k$ pour la mesure k est enregistré dans la mémoire de l'ordinateur, le déphasage entre la mesure k+1 et la mesure k est donné par :

$$\Delta\varphi_{(k)} = \varphi_{0(k+1)} - \varphi_{0(k)} = 2\pi \frac{m_j^{k+1} - m_j^k}{m_{j+2}^{k+1} - m_j^{k+1}} \qquad (18)$$

Ceci est vrai à condition que $m_j^{k+1}$ et $m_j^k$ correspondent tous deux au maximum ou tous deux au minimum d'une sinusoïde.

Alors, si l'épaisseur du verre n'a pas varié plus de $\lambda_0/(4n)$, la variation d'épaisseur entre la mesure k+1 et la mesure k est, d'après l'expression (9) :

$$\Delta e_{(k)} = \Delta e_{(k+1)} - \Delta e_{(k)} = \frac{\lambda_0}{2n} \frac{\Delta\varphi_{(k)}}{2\pi} \qquad (19)$$

Cette formulation de détermination de la dérivée du profil d'épaisseur est valable aussi bien pour une diode laser classique que pour une diode laser DBR.

Il reste à combiner le mode de calcul de l'épaisseur " absolue" avec celui de l'épaisseur " relative " pour disposer d'une résultat unique complet.

Le profil d'épaisseur peut être donné par :

$$e_{(k)} = e_{(1)} + \Delta e_{(k)} \qquad (20)$$

avec :

$$\Delta e_{(k)} = \sum_{j=2}^{k} \Delta e_{(j-1)} \qquad (21)$$

où $e_{(1)}$ désigne l'épaisseur à la première mesure (k = 1). Ici, k désigne le numéro de mesure, il représente naturellement le temps.

Le mode de mesure relative permet d'obtenir le profil de variation d'épaisseur $\Delta e_{(k)}$ avec une précision sub-micronique. Tout ce qui reste à faire pour obtenir le profil d'épaisseur final est de trouver la contante $e_{(1)}$.

Le mode de mesure absolue nous permet de déterminer $e_{(1)}$. Pour ce faire, il suffit de faire une mesure en mode absolu avant les mesures relatives. Mais, en pratique, une mesure effectuée au hasard n'est pas stable, compte tenu des phénomènes perturbateurs du signal pendant la mesure.

Un des remèdes à ce problème est de faire la moyenne d'un certain nombre de mesures en mode absolu, ce qui donne directement la constante $e_{(1)}$. Mais, la variation d'épaisseur du produit ne permet pas toujours d'avoir le temps pour effectuer beaucoup de mesures et en faire la moyenne. Il nous semble que la meilleure solution consiste à déterminer la contante $e_{(1)}$ dans le sens de moindre carré.

Pour une mesure de profil d'épaisseur, on obtient un profil d'épaisseur en mode absolu en M points de mesure

$$e_{A(k)} \text{ pour k = 1 à M}$$

On obtient ainsi, en mode relatif, le profil de variation d'épaisseur en M points de mesure :

$$\Delta e_{(k)} \text{ pour k = 1 à M}$$

Ici, k = 1 et k = M correspondent respectivement au début et à la fin du profil.

Il faut trouver la constante $e_{(1)}$ de façon que $[e_{(1)} + \Delta e_{(k)}]$ soit le plus proche possible de $e_{A(k)}$ dans le sens de moindre carré. Alors la constante $e_{(1)}$ peut être déterminée en minimisant la fonction suivante :

$$Q = \sum_{k=1}^{M} \left[ \left( e_{(1)} + \Delta e_{(k)} \right) - e_{A(k)} \right]^2$$

Le minimum de cette fonction existe pour $dQ/de_{(1)}$, ce qui conduit à :

$$e_{(1)} = \frac{1}{M} \sum_{k=1}^{M} \left( e_{A(k)} - \Delta e_{(k)} \right) \qquad (22)$$

En résumé, on peut dire que le profil d'épaisseur sur ligne float peut être mesuré de la façon suivante :

    1) les mesures s'effectuent pendant que le capteur se déplace transversalement sur le ruban,
    2) les mesures absolues et relatives sont effectuées pour tous les points de mesure sur le ruban, ce qui nous donne le profil d'épaisseur $e_{A(k)}$ en absolu et le profil de variation d'épaisseur $\Delta e_{(k)}$ en relatif,

3) le profil d'épaisseur final est $[e_{(1)} + \Delta e_{(k)}]$ où $e_{(1)}$ est déterminée par l'expression (22).

Pour vérifier la méthode de l'invention, on a procédé à différents essais.

Tout d'abord, une série de mesure est effectuée, utilisant une diode laser classique, sur des verres plats de différentes épaisseurs entre 1 mm et 20 mm. La **figure 7** montre le signal d'interférence $V_{int}$, le signal de modulation $V_{mod}$ et le signal de division $V_{div}$ pour une épaisseur de 1,67 mm et la **figure 8** pour une épaisseur de 3,83 mm.

Le procédé montre une précision de mesure du même ordre que celle du palmer, $\pm$ 5 μm.

En utilisant une diode laser DBR, on a effectué une série de mesure sur des verres plats de différentes épaisseurs entre 0,3 mm et 5 mm. La **figure 9** et la **figure 10** montrent les signaux pour une épaisseur de 1,67 mm et une épaisseur de 3,83 mm.

Comparant les **figures 7 et 9**, on peut facilement observer que pendant un montant (ou un descendant) de modulation triangulaire, pour la même épaisseur, il y a bien plus de battements avec une diode laser DBR qu'avec une diode laser classique. En même temps, l'effet d'accordéon sur le signal de division obtenu avec une diode laser DBR est bien visible, ce qui traduit la non linéarité de la fonction g(t) pour la diode laser DBR.

La mesure d'épaisseur avec une diode laser DBR nécessite avant tout une connaissance précise de la fonction g(t), c'est-à-dire la non linéarité de modulation de longueur d'onde par une modulation linéaire de courant. Cette fonction peut être déterminée par un "fitting" mathématique. Cela consiste à déterminer tous les paramètres dans les expressions suivantes :

$$V_{drv} = \frac{V_{int}}{V_{mod}} \propto 1 + C \cdot \cos(\varphi_0 + e \cdot g(t))$$

avec :

$$g(t) = b_1 t + b_2 t^2 + b_3 t^3 + ... \ (°/mm) \text{ pour } t = 1 \text{ à } 250$$

de façon que le signal de division mathématique ci-dessus soit le plus proche possible de celui expérimental dans le sens de moindre carré. Avec le signal de division expérimental pour une épaisseur de 1,67 mm (voir la **figure 9**), on obtient pour une diode laser DBR donnée:

$$b_1 = 3.57897, \ b_2 = 0.022936, \ b_3 = 4.81 \ 10^{-5} \text{ et } b_n = 0 \text{ pour } n > 3$$

Connaissant la fonction g(t), l'épaisseur du verre à mesurer peut être déterminée par l'expression (17).

Dans la **figure 11**, on a fait figurer les résultats expérimentaux d'une mesure effectuée dans la largeur d'un ruban de verre flotté qui défilait tandis que le dispositif de l'invention effectuait un travelling dans sa largeur. En abscisse, figure la largeur du ruban, de 0 à 350 cm, et en ordonnée l'épaisseur en mm. Les points-losanges représentent les mesures faites au palmer. On voit que la précision de la mesure selon l'invention est plus grande puisqu'il est possible d'interpoler entre deux mesures manuelles effectuées au centième de millimètre.

L'invention permet ainsi d'effectuer le suivi de l'épaisseur du verre flotté pendant la production avec une excellente précision. Grâce à l'invention, il est également possible d'effectuer cette mesure à chaud, c'est-à-dire avant que le verre ne pénètre dans l'étenderie de conditionnement thermique. La réaction des conducteurs de process sur les paramètres de la production peut alors s'effectuer sans délai ce qui limite beaucoup les pertes et, d'une manière générale, améliore la qualité.

**Revendications**

**1.** Procédé de mesure d'épaisseur (e) d'un matériau transparent d'indice de réfraction (n) dans lequel on focalise un faisceau lumineux à fréquence optique modulée, où l'on réceptionne deux faisceaux ou rayons lumineux renvoyés par chacune des surfaces du matériau transparent, où l'on crée une interférence entre eux et où l'on détermine le nombre de battements par période de modulation du signal d'interférence et où l'on déduit la différence de marche ($\delta$) entre les deux faisceaux et l'épaisseur (e) du matériau transparent, **caractérisé en ce qu'**on détermine également le déphasage ($\Delta\varphi$) dudit signal d'interférence.

**2.** Procédé selon la revendication 1, **caractérisé en ce que** le faisceau lumineux à fréquence optique modulée est émis par une diode laser à réflecteur de Bragg distribué (DBR).

**3.** Procédé selon la revendication 1, **caractérisé en ce que** les faisceaux renvoyés par les surfaces du matériau transparent le sont en réflexion spéculaire.

**4.** Procédé selon la revendication 1, **caractérisé en ce que** le faisceau lumineux focalisé, converge avant d'atteindre les surfaces du matériau transparent de telle sorte qu'il est divergent au niveau des surfaces dudit matériau transparent qu'il atteint.

**5.** Procédé selon l'une des revendications précédentes, **caractérisé en ce que** la mesure d'épaisseur est obtenue par :

- la numérisation du signal si nécessaire ;
- l'obtention du quotient du signal d'interférence par la modulation de l'intensité ;
- le filtrage passe bande du quotient ;
- la détermination des extréma du signal résultant pour la mesure à l'instant k ;
- la détermination du temps séparant les extréma homologues de deux mesures successives (k et k+1);
- le calcul du minimum des moindres carrés de la fonction :

$$Y = \sum_{j=1}^{L-1} \left[ e \cdot \left( g\left(m_{j+1}^{k}\right) - g\left(m_{j}^{k}\right) \right) - \pi \right]^{2}$$

  - où $m_{j}^{k}$ représente les positions des extréma du signal de division pour la mesure k,

  - g étant une caractéristique connue qui dépend de la diode laser utilisée ;

- le calcul de l'épaisseur par la formule :

$$e = \pi \frac{\sum_{j=1}^{L-1} \left( g\left(m_{j+1}^{k}\right) - g\left(m_{j}^{k}\right) \right)}{\sum_{j=1}^{L-1} \left( g\left(m_{j+1}^{k}\right) - g\left(m_{j}^{k}\right) \right)^{2}}$$

**6.** Procédé selon l'une des revendications précédentes, **caractérisé en ce qu'**il est appliqué à la mesure précise de variations locales d'épaisseur, notamment d'un ruban de verre flotté.

**7.** Procédé selon la revendication 6, **caractérisé en ce qu'**il est appliqué à la mesure de défauts dioptriques du verre flotté à partir de la mesure des variations locales d'épaisseur.

**8.** Procédé selon la revendication 6, **caractérisé en ce que** les variations locales d'épaisseur sont obtenues par réception du signal d'interférence sur un détecteur suivie par :

- la numérisation du signal si nécessaire ;
- l'obtention du quotient du signal d'interférence par la modulation de l'intensité ;
- le filtrage passe bande du quotient ;
- la détermination des extréma du signal résultant pour la mesure à l'instant k ;
- la détermination du temps séparant les extréma homologues de deux mesures successives (k et k+1);
- le calcul du quotient des temps précédents par les périodes correspondantes et sa multiplication par $2\pi$ pour obtenir le déphasage ;
- le calcul de la variation d'épaisseur par la formule :

$$\Delta e = \frac{\lambda_0 \cdot \Delta\varphi}{4n\pi}$$

avec :

- $\lambda_0$ = longueur d'onde de diode laser sans modulation,
- $\Delta\varphi$ = déphasage,
- n = indice de réfraction.

9. Procédé selon l'une des revendications 1 à 4, **caractérisé en ce qu'**on l'applique à la mesure de l'épaisseur d'un matériau transparent mince, de préférence supérieure à 0,2 mm.

10. Dispositif pour la mise en oeuvre du procédé selon la revendication 8, **caractérisé en ce qu'**il comporte notamment une source de lumière à diode laser DBR, une optique pour diriger un faisceau lumineux sur les surfaces de l'échantillon, des moyens de réception d'un signal interférentiel des faisceaux réémis par lesdites surfaces et un calculateur effectuant successivement :

- la numérisation des signaux ;
- le quotient du signal interférentiel et de la modulation d'intensité ;
- le filtrage passe bande du quotient numérisé ;
- la détermination des extréma du signal résultant pour la mesure à l'instant k ;
- la détermination du temps séparant les extréma homologues de deux mesures successives (k et k+1);
- le quotient des temps précédents par les périodes correspondantes et sa multiplication par $2\pi$ pour obtenir le déphasage ;
- le calcul de la variation d'épaisseur par la formule :

$$\Delta e = \frac{\lambda_0 \cdot \Delta\varphi}{4n\pi}$$

11. Dispositif selon la revendication 10, **caractérisé en ce qu'**il comporte notamment une source de lumière notamment à diode laser DBR, une optique pour diriger un faisceau lumineux sur les surfaces de l'échantillon, des moyens de réception d'un signal interférentiel des faisceaux réémis par lesdites surfaces et un calculateur effectuant successivement :

- la numérisation des signaux ;
- le quotient du signal interférentiel et de la modulation d'intensité ;
- le filtrage passe bande du quotient numérisé ;
- la détermination des extréma du signal résultant pour la mesure à l'instant k ;
- la détermination du temps séparant les extréma homologues de deux mesures successives (k et k+1) ;
- le calcul du minimum des moindres carrés de la fonction :

$$Y = \sum_{j=1}^{L-1} \left[ e \cdot \left( g\left(m_{j+1}^k\right) - g\left(m_j^k\right) \right) - \pi \right]^2$$

- le calcul de l'épaisseur par la formule :

$$e = \pi \frac{\sum_{j=1}^{L-1} \left( g\left(m_{j+1}^k\right) - g\left(m_j^k\right) \right)}{\sum_{j=1}^{L-1} \left( g\left(m_{j+1}^k\right) - g\left(m_j^k\right) \right)^2}$$

**12.** Dispositif selon la revendication 10 ou la revendication 11, **caractérisé en ce qu'**il comporte des guides d'onde à fibres optiques pour transporter la lumière émise par la diode laser et/ou réfléchie par les surfaces de l'objet transparent.

**13.** Dispositif selon l'une des revendications 10 ou 12, **caractérisé en ce qu'**il comporte comme moyen de réception une photodiode à avalanche.

**Patentansprüche**

**1.** Verfahren zur Messung der Dicke (e) eines transparenten Materials mit einem Brechungsindex (n), in welchem ein Lichtbündel mit modulierter optischer Frequenz fokussiert wird, zwei Lichtbündel oder Lichtstrahlen empfangen werden, die von den Oberflächen des transparenten Materials zurückgestrahlt werden, eine Interferenz zwischen ihnen erzeugt, die Anzahl der Ausschläge pro Modulationsperiode des Interferenzsignals bestimmt und der Gangunterschied (δ) zwischen den zwei Lichtbündeln und die Dicke (e) des transparenten Materials abgeleitet wird, **dadurch gekennzeichnet, dass** auch die Phasenverschiebung (Δφ) des Interferenzsignals ermittelt wird.

**2.** Verfahren nach Anspruch 1, **dadurch gekennzeichnet, dass** das Lichtbündel mit modulierter optischer Frequenz von einer DBR-Laserdiode (DBR = Distributed Bragg Reflector) ausgesendet wird.

**3.** Verfahren nach Anspruch 1, **dadurch gekennzeichnet, dass** die von den Oberflächen des transparenten Materials zurückgesendeten Lichtbündel einer Spiegelreflexion unterliegen.

**4.** Verfahren nach Anspruch 1, **dadurch gekennzeichnet, dass** das fokussierte Lichtbündel, bevor es die Oberflächen des transparenten Materials erreicht, derart konvergiert, dass es an den Oberflächen des transparenten Materials, die es erreicht, divergiert.

**5.** Verfahren nach einem der vorhergehenden Ansprüche, **dadurch gekennzeichnet, dass** die Dickenmessung durchgeführt wird durch:

- erforderlichenfalls Digitalisierung des Signals,
- Erhalten des Quotienten des Interferenzsignals durch Modulation der Intensität,
- Banddurchlauffiltern des Quotienten,
- Bestimmung der Extremwerte des resultierenden Signals für die Messung zum Zeitpunkt k,
- Bestimmung des Zeitraums, der die entsprechenden Extremwerte von zwei aufeinander folgenden Messungen (k und k+1) voneinander trennt,
- Berechnung des Minimums der kleinsten Fehlerquadrate der Funktion:

$$Y = \sum_{j=1}^{i-1} \left[ e \cdot \left( g\left(m_{j+1}^k\right) - g\left(m_j^k\right)\right) - \pi \right]^2 ,$$

- - worin $m_j^k$ die Positionen der Extremwerte des Teilungssignals für die Messung k repräsentiert und
- - g ein bekannter Kennwert ist, der von der verwendeten Laserdiode abhängig ist, und

- Berechnung der Dicke mit der Formel:

$$e = \pi \frac{\sum_{j=1}^{i-1} \left( g\left(m_{j+1}^k\right) - g\left(m_j^k\right)\right)}{\sum_{j=1}^{i-1} \left( g\left(m_{j+1}^k\right) - g\left(m_j^k\right)\right)^2} .$$

6. Verfahren nach einem der vorhergehenden Ansprüche, **dadurch gekennzeichnet, dass** es auf die Messung lokaler Dickenschwankungen, insbesondere eines Floatglasbandes, angewendet wird.

7. Verfahren nach Anspruch 6, **dadurch gekennzeichnet, dass** es auf die Messung von Lichtbrechungsfehlern eines Floatglases ausgehend von der Messung lokaler Dickenschwankungen angewendet wird.

8. Verfahren nach Anspruch 6, **dadurch gekennzeichnet, dass** die lokalen Dickenschwankungen durch Empfang des Interferenzsignals in einem Detektor erhalten und verfolgt werden durch:

   • erforderlichenfalls Digitalisierung des Signals,
   • Erhalten des Quotienten des Interferenzsignals durch Modulation der Intensität,
   • Banddurchlauffiltern des Quotienten,
   • Bestimmung der Extremwerte des resultierenden Signals für die Messung zum Zeitpunkt k,
   • Bestimmung des Zeitraums, der die entsprechenden Extremwerte von zwei aufeinander folgenden Messungen (k und k+1) voneinander trennt,
   • Berechnung des Quotienten der vorhergehenden Zeiträume durch die entsprechenden Perioden und seine Multiplizierung mit $2\pi$, um die Phasenverschiebung zu erhalten, und
   • Berechnung der Dickenschwankung mit der Formel:

   $$\Delta e = \frac{\lambda_0 \Delta\varphi}{4n\pi},$$

   mit:

   - $\lambda_0$ = Wellenlänge der Laserdiode ohne Modulation,
   - $\Delta\varphi$ = Phasenverschiebung und
   - $n$ = Brechungsindex.

9. Verfahren nach einem der Ansprüche 1 bis 4, **dadurch gekennzeichnet, dass** es auf die Messung der Dicke eines dünnen transparenten Materials mit einer Dicke von vorzugsweise über 0,2 mm angewendet wird.

10. Vorrichtung zur Durchführung des Verfahrens nach Anspruch 8, **dadurch gekennzeichnet, dass** sie insbesondere eine Lichtquelle mit DBR-Laserdiode, eine Optik, um ein Lichtbündel auf die Oberflächen eines Probekörpers zu leiten, Mittel zum Empfang eines Interferenzsignals der von diesen Oberflächen zurückgesendeten Lichtbündel und eine Recheneinrichtung umfasst, die nacheinander durchführt:

   • Digitalisierung der Signale,
   • den Quotienten des Interferenzsignals und der Intensitätsmodulation,
   • Banddurchlauffiltern des digitalisierten Quotienten,
   • Bestimmung der Extremwerte des resultierenden Signals für die Messung zum Zeitpunkt k,
   • Bestimmung des Zeitraums, der die entsprechenden Extremwerte von zwei aufeinander folgenden Messungen (k und k+1) voneinander trennt,
   • den Quotienten der vorhergehenden Zeiträume durch die entsprechenden Perioden und seine Multiplizierung mit $2\pi$, um die Phasenverschiebung zu erhalten, und
   • Berechnung der Dickenschwankung mit der Formel:

   $$\Delta e = \frac{\lambda_0 \Delta\varphi}{4n\pi},$$

11. Vorrichtung nach Anspruch 10, **dadurch gekennzeichnet, dass** sie insbesondere eine Lichtquelle, speziell eine DBR-Laserdiode, eine Optik, um ein Lichtbündel auf die Oberflächen eines Probekörpers zu leiten, Mittel zum Empfang eines Interferenzsignals der von diesen Oberflächen zurückgesendeten Lichtbündel und eine Recheneinrichtung umfasst, die nacheinander durchführt:

   • Digitalisierung der Signale,
   • den Quotienten des Interferenzsignals und der Intensitätsmodulation,

- Banddurchlauffiltern des digitalisierten Quotienten,
- Bestimmung der Extremwerte des resultierenden Signals für die Messung zum Zeitpunkt k,
- Bestimmung des Zeitraums, der die entsprechenden Extremwerte von zwei aufeinander folgenden Messungen (k und k+1) voneinander trennt,
- Berechnung des Minimums der kleinsten Fehlerquadrate der Funktion:

$$Y = \sum_{j=1}^{l-1} \left[ e \cdot \left( g(m_{j+1}^k) - g(m_j^k) \right) - \pi \right]_l^2$$

und
- Berechnung der Dicke mit der Formel:

$$e = \pi \frac{\sum_{j=1}^{l-1} \left( g(m_{j+1}^k) - g(m_j^k) \right)}{\sum_{j=1}^{l-1} \left( g(m_{j+1}^k) - g(m_j^k) \right)^2} .$$

12. Vorrichtung nach Anspruch 10 oder 11, **dadurch gekennzeichnet, dass** sie Faseroptik-Wellenleiter zum Leiten des Lichts, das von der Laserdiode ausgesendet und/oder den Oberflächen des transparenten Objekts reflektiert wird, umfasst.

13. Vorrichtung nach Anspruch 10 oder 12, **dadurch gekennzeichnet, dass** sie als Empfangsmittel eine Lawinenphotodiode enthält.

## Claims

1. Method of measuring the thickness (e) of a transparent material with a refractive index (n) in which a light beam with a modulated optical frequency is focused, where two light beams or rays returned by each of the surfaces of the transparent material are received, where an interference is created between them and where the number of beats per modulation period of the interference signal is determined and where the difference in step (δ) between the two beams and the thickness (e) of the transparent material is deduced, **characterised in that** the phase shift (Δφ) of the said interference signal is also determined.

2. Method according to Claim 1, **characterised in that** the light beam with a modulated optical frequency is emitted by a laser diode with a distributed Bragg reflector (DBR).

3. Method according to Claim 1, **characterised in that** the beams returned by the surfaces of the transparent material are returned in specular reflection.

4. Method according to Claim 1, **characterised in that** the focused light beam converges before reaching the surfaces of the transparent material so that it is divergent at the surfaces of the said transparent material which it reaches.

5. Method according to one of the preceding claims, **characterised in that** the thickness measurement is obtained by:

- digitisation of the signal if necessary;

- obtaining the quotient of the interference signal by modulation of the intensity;

- passband filtering of the quotient;

- determining the extrema of the resulting signal for the measurement at time k;

- determining the time separating the homologous extrema of two successive measurements (k and k+1);

- calculating the minimum of the least squares of the function:

$$Y = \sum_{j=1}^{L-1} \left[ e - \left( g(m_{j+1}^k) - g(m_j^k) \right) - \pi \right]^2$$

- where $m_j^k$ represents the positions of the extrema of the division signal for the measurement k,

- g being a known characteristic which depends on the laser diode used;

- calculating the thickness by the formula:

$$e = \pi \frac{\sum_{j=1}^{L-1} \left( g(m_{j+1}^k) - g(m_j^k) \right)}{\sum_{j=1}^{L-1} \left( g(m_{j+1}^k) - g(m_j^k) \right)^2}$$

6. Method according to one of the preceding claims, **characterised in that** it is applied to the precise measurement of local variations in thickness, in particular of a ribbon of float glass.

7. Method according to Claim 6, **characterised in that** it is applied to the measurement of dioptric defects in the float glass from the measurement of the local variations in thickness.

8. Method according to Claim 6, **characterised in that** the local variations in thickness are obtained by receiving the interference signal on a detector followed by:

- digitisation of the signal if necessary;

- obtaining the quotient of the interference signal by modulation of the intensity;

- passband filtering of the quotient;

- determining the extrema of the resulting signal for the measurement at time k;

- determining the time separating the homologous extrema of two successive measurements (k and k+1);

- calculating the quotient of the previous times by the corresponding periods and multiplying it by $2\pi$ in order to obtain the phase shift;

- calculating the variation in thickness by means of the formula:

$$\Delta e = \frac{\lambda_0 \cdot \Delta \varphi}{4 n \pi}$$

with:

- $\lambda_0$ equals laser diode wavelength without modulation,

- $\Delta\varphi$ equals phase shift,

- n equals refractive index.

**9.** Method according to one of Claims 1 to 4, **characterised in that** it is applied to the measurement of the thickness of a thin transparent material, preferably greater than 0.2 mm.

**10.** Device for implementing the method according to Claim 8, **characterised in that** it comprises in particular a source of DBR laser diode light, a lens for directing a light beam onto the surfaces of the sample, means of receiving an interference signal of the two beams re-emitted by the said surfaces and a calculator effecting successively:

- the digitisation of the signals;

- the quotient of the interference signal and the intensity modulation;

- the passband filtering of the digitised quotient;

- the determination of the extrema of the resulting signal from the measurement at time k;

- the determination of the time separating the homologous extrema of two successive measurements (k and k+1);

- the quotient of the previous times divided by the corresponding periods and its multiplication by $2\pi$ in order to obtain the phase shift;

- the calculation of the variation in thickness by means of the formula:

$$\Delta e = \frac{\lambda_0 . \Delta\varphi}{4n\pi}$$

**11.** Device according to Claim 10, **characterised in that** it comprises in particular a source of DBR laser diode light, a lens for directing a light beam onto the surfaces of the sample, means of receiving an interference signal of the two beams re-emitted by the said surfaces and a calculator effecting successively:

- the digitisation of the signals;

- the quotient of the interference signal and the intensity modulation;

- the passband filtering of the digitised quotient;

- the determination of the extrema of the resulting signal from the measurement at time k;

- the determination of the time separating the homologous extrema of two successive measurements (k and k+1);

- the calculation of the minimum of the least squares of the function:

$$Y = \sum_{j=1}^{L-1} \left[ e - \left( g\left(m_{j+1}^k\right) - g\left(m_j^k\right)\right) - \pi \right]^2$$

- the calculation of the thickness by the formula:

$$e = \pi \frac{\sum_{j=1}^{L-1} \left( g(m_{j+1}^{k}) - g(m_{j}^{k}) \right)}{\sum_{j=1}^{L-1} \left( g(m_{j+1}^{k}) - g(m_{j}^{k}) \right)^2}$$

**12.** Device according to Claim 10 or Claim 11, **characterised in that** it comprises optical-fibre waveguides for transporting the light emitted by the laser diode and/or reflected by the surfaces of the transparent object.

**13.** Device according to one of Claims 10 or 12, **characterised in that** it comprises, as the receiving means, an avalanche photodiode.

# *Fig.* 1

# Fig. 2

*Fig. 3*

*Fig. 4* (P-P)

PC

15

8

$V_{div}$

14

$V_{mod}$

10

11

9

1

13

12

5

4

7

*Fig. 5*

Fig. 6

## Fig. 7

## Fig. 8

Fig. 9

Fig. 10

## Fig. 11